# EUROPEAN PATENT APPLICATION

(11) **EP 4 346 326 A1**
(43) Date of publication of application: **03.04.2024**
(21) Application number: 22838059.8
(22) Date of filing: 08.07.2022
(51) Int. Cl.: H04W 76/40, H04W 76/30, H04W 76/11, H04L 67/14, H04W 4/06

(54) **METHOD AND DEVICE FOR PROCESSING PDU SESSION ASSOCIATED WITH MBS SESSION IN WIRELESS COMMUNICATION SYSTEM**

(30) Priority: 09.07.2021 KR 20210090309
(71) Applicant: Samsung Electronics Co., Ltd., Suwon-si, Gyeonggi-do 16677 (KR)
(72) Inventor: BAEK, Youngkyo, Suwon-si, Gyeonggi-do 16677 (KR); SUH, Kyungjoo, Suwon-si, Gyeonggi-do 16677 (KR)
(74) Representative: HGF
(86) International application number: PCT/KR2022/009988
(87) International publication number: WO 2023/282707

(57) **Abstract**

The present disclosure relates to a 5G or 6G communication system for supporting a higher data transmission rate. A method for processing a multicast-broadcast service (MBS) session of a session management function (SMF) in a wireless communication system, according to one embodiment of the present disclosure, comprises the steps of: receiving, from an access and mobility management function (AMF), a first message requesting the update of a packet data unit (PDU) session related to the MBS session, if a terminal decides to leave the MBS session; and transmitting, to the AMF, a second message, which is a response to the update of the PDU session, in response to the first message.

## Description

### [Technical Field]

The disclosure relates to a method and an apparatus for providing a multicast service to a UE and, more particularly, to a method and an apparatus for processing, when a request for releasing a PDU session associated with a multicast session is made to provide a multicast service to a UE in a 5G network, the corresponding PDU session.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial stage of 5G mobile communication technologies, in order to support services and to satisfy performance requirements in connection with enhanced Mobile BroadBand, (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (Bandwidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR, VR, and the like (XR = AR + VR + MR), 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, a scheme of processing a PDU session associated with a multicast session to provide a multicast service to a UE in a 5G network is needed.

### [Detailed Description of the Invention]

### [Technical Problem]

In order to provide a multicast-broadcast service (MBS), a 5G system (5GS) may receive MBS data from an application function (AF) or a contents provider and transfer the same to an NG-RAN.

The NG-RAN may transmit MBS data to terminals, for example, user equipments (UEs) subscribing to the MBS. In the case of a multicast service among the MBS services, the UE may make a request for joining in the corresponding MBS session in order to receive the MBS service or make a request for leaving the MBS session in order to stop receiving the MBS service. The joining request or the leaving request may be transmitted to the SMF while including an MBS session ID and a request type when the UE performs a PDU session modification request process.

A PDU Session used to make the joining and leaving requests may be referred to as a PDU session associated with the MBS session. When the UE receives the service from the NG-RAN having no MBS capability, the PDU session associated with the MBS session is a PDU session used when an individual delivery method used to transmit MBS data is applied.

Meanwhile, in the state in which the UE receives the multicast service through any MBS session, when a situation in which a PDU session associated with the MBS session should be released occurs, a method of processing the serviced multicast service is needed.

### [Technical Solution]

A method of processing a multicast-broadcast service (MBS) session by a session management function (SMF) in a wireless communication system according to an embodiment of the disclosure includes receiving a first message making a request for releasing a packet data unit (PDU) session from a user equipment (UE) related to the PDU session through an access and mobility management function (AMF), identifying the MBS session mapped to the PDU session, determining whether the UE continuously receives a service in the MBS session, and transmitting information on whether the UE continuously receives the service in the MBS session to the UE through the AMF, based on a determination result.

According to an embodiment, the method of processing the MBS session by the SMF may further include, when it is determined that the UE does not receive the service in the MBS session any more, transmitting an indication indicating that the UE does not receive the service in the MBS session any more to the UE through the AMF and receiving a second message indicating that release of the PDU session is completed to the UE through the AMF.

According to an embodiment, the method of processing the MBS session by the SMF may further include, when it is determined that the UE continuously receives the service in the MBS session, transmitting information indicating that the MBS session is in an alive state to the UE through the AMF.

According to an embodiment, the method of processing the MBS session by the SMF may further include, when it is determined that the UE continuously receives the service in the MBS session, transmitting a flag making a request for establishing a PDU session with the same PDU session ID to the UE through the AMF.

According to an embodiment, the method of processing the MBS session by the SMF may further include determining a first MBS session to continuously provide the service to the UE and a second MBS session not to provide the service to the UE any more among a plurality of MBS sessions mapped to the PDU session.

A method of processing a multicast-broadcast service (MBS) session by a user equipment (UE) in a wireless communication system according to an embodiment of the disclosure includes transmitting a first message making a request for releasing a packet data unit (PDU) session to a session management function (SMF) through an access and mobility management function (AMF), receiving first information on whether the UE continuously receives a service in the MBS session mapped to the PDU session from the SMB through the AMF, and processing the MBS session, based on the first information.

According to an embodiment, the method of processing the MBS session by the UE may further include, when it is determined that the UE does not receive the service in the MBS session any more, receiving an indication indicating that the UE does not receive the service in the MBS session any more from the SMF through the AMF and transmitting a second message indicating that release of the PDU session is completed to the SNF through the AMF.

According to an embodiment, the method of processing the MBS session by the UE may further include, when it is determined that the UE continuously receives the service in the MBS session, receiving information indicating that the MBS session is in an alive state from the SMF through the AMF.

According to an embodiment, the method of processing the MBS session by the UE may further include, when it is determined that the UE continuously receives the service in the MBS session, receiving a flag making a request for establishing a PDU session with the same PDU session ID from the SMF through the AMF.

According to an embodiment, in the method of processing the MBS session by the UE, a first MBS session to continuously provide the service to the UE may be determined among a plurality of MBS sessions mapped to the PDU session and a second MBS session not to provide the service to the UE any more may be determined among the plurality of MBS sessions.

A session management function (SMF) processing a multicast-broadcast service (MBS) session in a wireless communication system according to an embodiment of the disclosure may include a transceiver and a controller connected to the transceiver and configured to perform control to receive a first message making a request for releasing a packet data unit (PDU) session from a user equipment (UE) related to the PDU session through an access and mobility management function (AMF), identify the MBS session mapped to the PDU session, determine whether the UE continuously receives a service in the MBS session, and transmit information on whether the UE continuously receives the service in the MBS session to the UE through the AMF, based on a determination result

A user equipment (UE) processing a multicast-broadcast service (MBS) session in a wireless communication system according to an embodiment of the disclosure may include a transceiver and a controller connected to the transceiver and configured to perform control to transmit a first message making a request for releasing a packet data unit (PDU) session to a session management function (SMF) through an access and mobility management function (AMF), perform control to receive first information on whether the UE continuously receives a service in the MBS session mapped to the PDU session from the SMB through the AMF, and process the MBS session, based on the first information.

### [Advantageous Effects]

A method and an apparatus according to embodiments of the disclosure can efficiently control an associated PDU session for a UE using a multicast-broadcast service (MBS) in a 5G system (5GS).

### [Brief Description of Drawings]

FIG. 1 illustrates a path of the flow of control messages and MBS traffic when a UE uses an MBS service in a wireless communication system according to an embodiment of the disclosure.
FIG. 2 illustrates a process of processing an MBS session when a UE makes a request for releasing an associated PDU session in a wireless communication system according to an embodiment of the disclosure.
FIG. 3 illustrates a process in which a UE continuously receives the MBS service when a request for releasing an associated PDU session is made in a wireless communication system according to an embodiment of the disclosure.
FIG. 4 illustrates a process in which a UE continuously receives the MBS service when a request for releasing an associated PDU session is made in a wireless communication system according to another embodiment of the disclosure.
FIG. 5 illustrates an MBS session processing process when a UE makes a request for releasing an associated PDU session in a wireless communication system according to another embodiment of the disclosure.
FIG. 6 illustrates a process in which a UE continuously receives the MBS service when a request for releasing an associated PDU session is made in a wireless communication system according to another embodiment of the disclosure.
FIG. 7 illustrates a process in which a UE continuously receives the MBS service when a request for releasing an associated PDU session is made in a wireless communication system according to another embodiment of the disclosure.
FIG. 8 illustrates a process in which a UE continuously receives the MBS service when a network makes a request for releasing an associated PDU session in a wireless communication system according to an embodiment of the disclosure.
FIG. 9 illustrates a process of processing an MBS session when a network makes a request for releasing an associated PDU session in a wireless communication system according to another embodiment of the disclosure.
FIG. 10 illustrates the structure of an SMF according to an embodiment of the disclosure.
FIG. 11 illustrates the structure of a UE according to an embodiment of the disclosure.

### [Mode for Carrying out the Invention]

Hereinafter, the operation principle of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description, the disclosure will be described using terms and names defined in the standards for 5G systems for the sake of descriptive convenience. However, the disclosure is not limited by these terms and names, and may be applied in the same way to systems that conform other standards.

A method of transferring MBS data to an NG-RAN in a 5G core network includes two methods such as shared delivery and individual delivery. When the NG-RAN has an MBS capability, the MBS data may be transmitted through a tunnel for shared delivery from a multicast/broadcast user-plane function (MB-UPF) device to the NG-RAN.

On the other hand, when the NG-RAN has no MBS capability, shared delivery is impossible, and thus MBS data received through the MB-UPF by individual delivery may be transmitted to the UE through a tunnel from the corresponding UPF to the NG-RAN via an associated PDU session.

When the UE desires to receive a multicast service, the UE may transmit an ID of an MBS session to join and a join request to an SMF through a PDU session modification message in order to make a request for joining in the MBS session and establish an association relationship between the MBS session and the PDU session. Meanwhile, in a state where release of the PDU session is needed, a scheme of processing the associated MBS sessions is required.

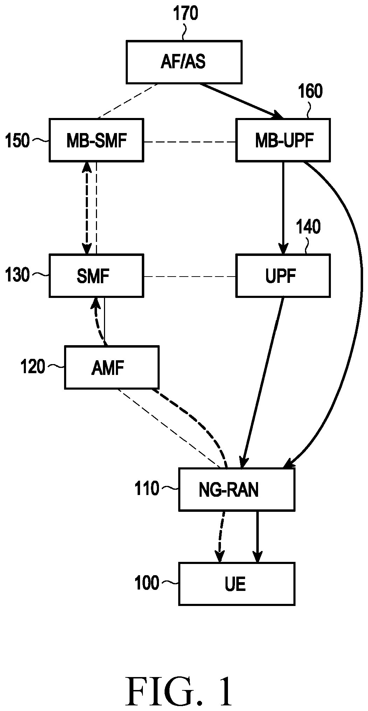

FIG. 1 illustrates a path of the flow of control messages and MBS traffic when the UE uses an MBS service in a wireless communication system according to an embodiment of the disclosure.

Referring to FIG. 1, a wireless communication (or cellular) system may include a user equipment (UE) 100, an NG radio access network (NG-RAN) 110 corresponding to a base station, an access and mobility management function (AMF) device 120, a PDU session management function (SMF) device 130, a user plane function (UPF) device 140 of a PDU session, a multicast/broadcast-session management function (MB-SMF) device 150, a multicast/broadcast user plane function (MB-UPF) device 160, an application function (AF) or an application server device 170.

In description of FIG. 1, each network function (NF) of the 5GS are referred to as a "network function device" or the "network function" itself. According to an embodiment, the NF and/or the NF device may be implemented in one specific or two or more servers, or two or more NFs performing the same operation may be implemented in one server.

One NF or two or more NFs may be implemented in the form of one network slice according to circumstances. The network slice may be generated based on a specific purpose. For example, a network slice may be configured to provide the same type service to specific subscriber groups. For example, the network slice may be configured for a subscriber group for providing at least one of a maximum transmission rate, an amount of used data, and a corrected minimum transmission rate. In addition, the network slice may be implemented according to various purposes.

In FIG. 1, an interface for a control message between respective nodes is expressed by dotted lines, a path for transmitting data traffic is expressed by thick solid lines, and a path for transmitting a control message is expressed by thick dotted lines.

For example, multicast data traffic may be transferred from the AF/AS 170 to the MB-UPF 160. When it is assumed that the serving NG-RAN 110 of the UE 100 has no MBS capability, multicast data traffic may be transferred to the serving NG-RAN 110 via the UPF 140 and then transferred to the UE 100 through an individual delivery method.

When it is assumed that the serving NG-RAN 110 of the UE 100 has the MBS capability, multicast data traffic may be transferred to the serving NG-RAN 110 via the MB-UPF 160 and then transferred to the UE 100 through a shared delivery method.

In order to support the MBS service in the 5GS, a cellular system for the MBS may be configured by the following network function devices and services.

The AF/AS 170 may be implemented by at least one of, for example, a V2X application server, a CIoT application server, an MCPTT application, a contents provider, a TV or audio service provider, and a streaming video service provider.

The AF/AS 170 may make a request for a multicast service to the MB-SMF 150. The MB-SMF 150 may manage a multicast session, allocate a temporary mobile group identity (TMGI) to the multicast session, and control the MB-UPF 160. The MB-UPF 160 may serve as a user plane function which receives and transmits data traffic for the multicast session.

Meanwhile, the UE 100 which desires to join in the multicast session may make a request for joining in the multicast session through a PDU session modification request message. The SMF 130 receiving the request for joining in the multicast session may acquire context information for the multicast session from the MB-SMF 150 and manage mapping between the multicast session and the PDU session. At this time, the PDU session may be referred to as an associated PDU session.

When transmitting mapping between the multicast session ID and the PDU session ID and multicast session traffic from multicast session context, the SMF 130 may store mapping between multicast QoS flow information for application of a shared delivery method and unicast QoS flow information for application of an individual delivery method to the corresponding multicast session. The SMF 130 may apply the QoS according to the used transmission method (shared delivery method or individual delivery method). At this time, the unicast QoS flow applied to the PDU session may be referred to associated QoS flow.

The SMF 130 may store a downlink packet detection rule (DL PDR) including an SDF template for mapping service data flow (SDF) of the multicast session to the associated QoS flow. When the SMF 130 transfers the downlink packet detection rule (DL PDR) to the UPF 140 and the individual delivery method is used, the SMF 130 may perform control to apply multicast service traffic transferred to the UPF 140 according to associated QoS flow information, that is, a QoS profile through the associated QoS flow of the associated PDU session.

In this document, a multicast session and an MBS session are interchangeably used and a multicast session ID and an MBS session ID are also interchangeably used, but they are all used to designate a multicast session.

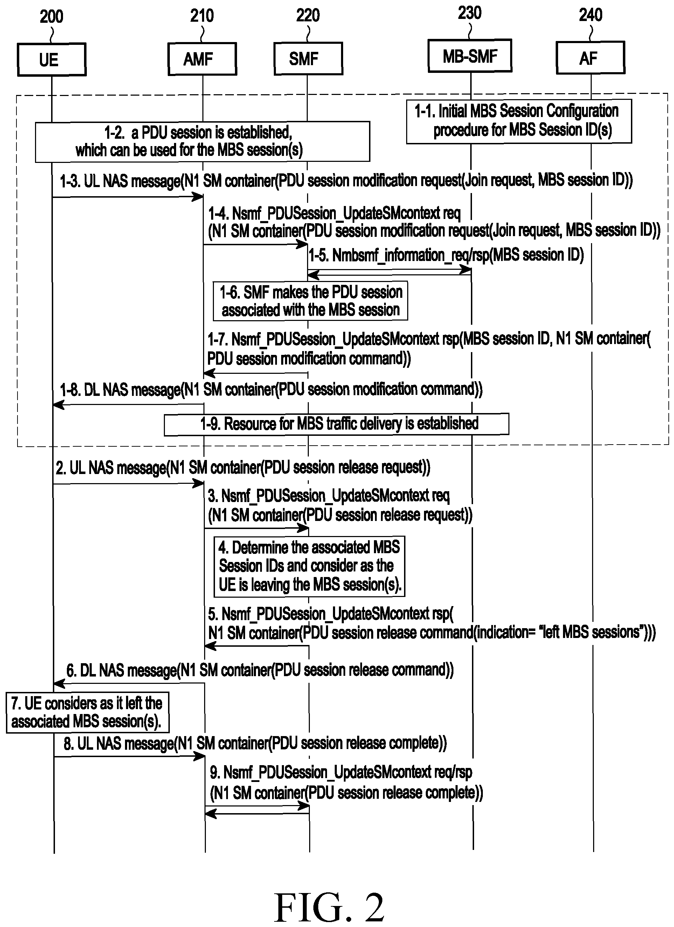

FIG. 2 illustrates an MBS session processing process when a UE makes a request for releasing an associated PDU session in a wireless communication system according to an embodiment of the disclosure.

FIG. 2 illustrates an embodiment in which, when a UE 200 makes a request for releasing an associated PDU session, an SMF 220 analyzes and processes that a request for leaving an MBS session of the UE 220 is included.

In the disclosure, "leave the MBS session" may mean the UE 200 does not receive the service in the corresponding MBS session any more. In this case, the corresponding MBS session itself is not released but only association between the PDU session of the UE 200 and the MBS session may be released.

Referring to FIG. 2, when the individual delivery method is used, a multicast traffic control process through the used associated PDU session may be performed. According to an embodiment,

as shown in operation 1-1 and operation 1-2, the AF 240 may make a request for an initial MBS session configuration process for the MBS session to the MB-SMF 230, perform the process, and generate an MBS session for the corresponding multicast service. The UE 200 may generate a PDU session which can be used for making a request for joining in or leaving the multicast session.

When the UE 200 makes a request for joining in the multicast session, the session join request of the UE 200 and the corresponding MBS session ID may be inserted into the PDU session modification request message and transferred to the SMF 220 through the AMF 210 as shown in operations 1-3 and 1-4.

When there is no MBS content for the corresponding MBS session ID as shown in operation 1-5, the SMF 220 receiving the join request may discover the MB-SMF 230 managing the corresponding MBS session ID and acquire context for the corresponding MBS session.

In operation 1-6, the SMF 220 may store (or generate) at least one piece of MBS service area information for the corresponding MBS session ID, mapping information between the MBS session ID and the associated PDU session ID, mapping information between multicast QoS flow information and associated QoS flow information, and updated QoS flow information for the PDU session as the MBS session context, based on the MBS session context received from the MB-SMF 230. The QoS flow information may include a QoS flow identifier (QFI) and a QoS profile, and the QoS profile may include a GBR or non-GBR, a 5G QoS identifier (5QI), an application and retention priority (ARP), a guaranteed flow bit rate (BFBR), and a maximum flow bit rate (MFBR).

The SMF 220 may store a downlink packet detection rule (DL PDR) including an SDF template for mapping service data flow (SDF) of the multicast session to the associated QoS flow. The SDF template mapped to the associated QoS flow may include multicast IP address information and port information, unicast IP address information and port information, or lower layer multicast (LL MC) address information for providing multicast data from the MB-UPF corresponding to a user plane anchor for the MBS session to the UPF.

In operations 1-7 and 1-8, the SMF 220 may insert a PDU session modification command message into an Nsmf_PDUSession_UpdateSMcontext response message and transmit the same to the AMF 210. The AMF 210 may insert the PDU session modification command message into an N1 SM container, transfer the DL NAS message to the UE 200, and complete the PDU session modification process. In operation 1-9, the AMF 210, the SMF 220, and the MB-SMF 230 may set up resources for transferring MBS traffic to the NG-RAN.

Meanwhile, when the UE 200 should release the associated PDU session while receiving the service, the UE 200 may transmit a PDU session release request message to the SMF 220 through the AMF 210 as shown in operation 2 and operation 3. In operation 2, the UE 200 may transmit the N1 SM container including the PDU session release request message to the AMF 210 through the UL NAS message. In operation 3, the AMF 210 may transmit the N1 SM container including the PDU session release request message to the SMF 220 through an Nsmf_PDUSession_UpdatedSMcontext req message.

In operation 4, the SMF 220 may recognize that there are MBS sessions associated with the PDU session and process that the UE 200 transmitted a leaving request for the corresponding MBS session ID. According to an embodiment, the SMF 220 recognizes that the leaving request is received for all MBS sessions associated with the PDU session.

The SMF 220 may delete mapping information between the PDU session ID and MBS session IDs and make the UE 200 not receive the service any more in the corresponding MBS session.

In operation 5 and operation 6, the SMF 220 may notify that the request for releasing the PDU session is processed by transmitting the PDU session release command message to the AMF 210 and the UE 200. The PDU session release command message may include a separate indication="left MBS Sessions" in order to inform that leaving of the UE has been processed for the MBS sessions associated with the PDU session.

According to an embodiment, when the SMF 220 processes leaving only for some of the MBS sessions, a list of MBS session IDs of the MBS sessions for which leaving has been actually performed may be inserted into the PDU session release command message. According to an embodiment, the PDU session release command message may inform that the UE leaves from all of the associated MBS sessions through the fact that the PDU session release command message does not include a separate indication or MBS session IDs.

When the UE 200 receives the PDU session release command message, the UE 200 may know that the UE 200 leaves the MBS sessions associated with PDU session through the indication="left MBS sessions" in operation 7. According to an embodiment, the UE 200 may know that the UE leaves the MBS session IDs included in the PDU session release command message or know that the UE leaves the MBS sessions associated with the PDU session through information indicating that the PDU session release command message does not include a separate indication or MBS session IDs.

When the UE 200 releases the PDU session according to the PDU session release command, the UE 200 may transfer a PDU session release complete message to the SMF 220 through the AMF 210 in operation 8 and operation 9. The SMF 220 may delete information on the PDU session from the network and complete the PDU session release procedure.

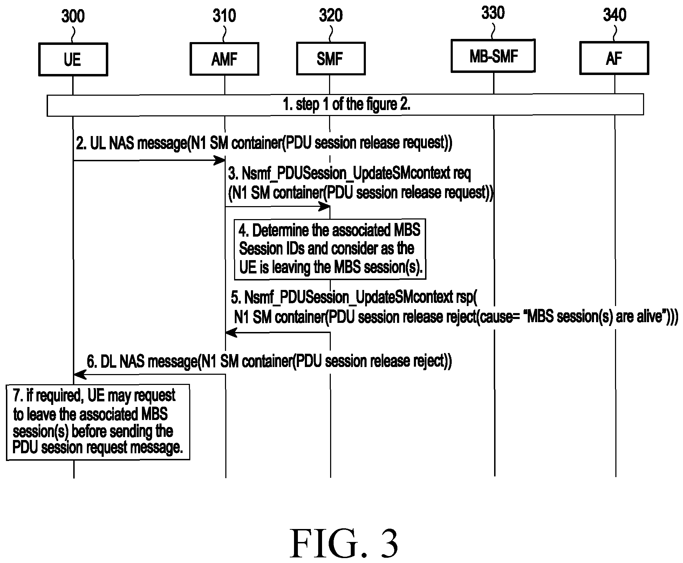

FIG. 3 illustrates a process in which a UE continuously receives the MBS service when a request for releasing an associated PDU session is made in a wireless communication system according to an embodiment of the disclosure.

In FIG. 3, when a UE 300 makes a request for releasing an associated PDU session, an SMF 320 may maintain joining of the UE 300 in the MBS session and allow the UE to continuously receive the multicast service.

Referring to FIG. 3, when the individual delivery method is used, a multicast traffic control process through the used associated PDU session may be performed.

Referring to FIG. 3, in operation 1, as shown in operations 1-1 to 1-9 of FIG. 2, the multicast session may be generated and the UE 300 may join in the generated multicast MBS session and perform a procedure of receiving the multicast service.

When the UE 300 should release the associated PDU session while receiving the service, the UE 300 may transmit a PDU session release request message to the SMF 320 through the AMF 310 as shown in operation 2 and operation 3.

The SMF 320 may recognize that there are MBS sessions associated with the PDU session and determine that the UE 300 desires to continuously maintain the multicast service for the MBS sessions in operation 4.

When the PDU session is deleted according to the PDU session release request, the service for the associated MBS sessions cannot continue, and thus the SMF 320 may reject the request from the UE 300.

For example, in operation 5 and operation 6, the SMF 320 may transmit a PDU session release reject message to the UE 300 to inform the UE of rejection of the PDU session release request. According to an embodiment, the PDU session release reject message may include cause ="MBS Session(s) are alive" as a cause of rejection.

When the UE 300 receives the PDU session release reject message, the UE 300 may release the PDU session by transmitting the PDU session release request message after first performing leaving for the MBS sessions associated with the PDU session through a PDU session modification request process in operation 7.

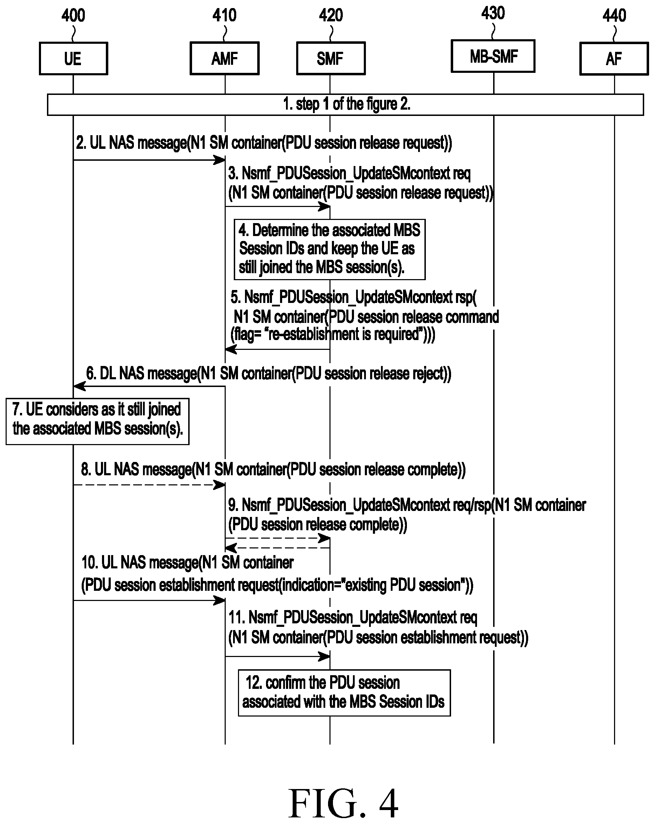

FIG. 4 illustrates a process in which a UE continuously receives the MBS service when a request for releasing an associated PDU session is made in a wireless communication system according to another embodiment of the disclosure.

In FIG. 4, when a UE 400 makes a request for releasing an associated PDU session, an SMF 420 may maintain joining of the UE 400 in the MBS session and allow the UE to continuously receive the multicast service.

Referring to FIG. 4, when the individual delivery method is used, a multicast traffic control process through the used associated PDU session may be performed. According to an embodiment, as shown in operations 1-1 to 1-9 of FIG. 2, the multicast session may be generated and the UE 400 may join in the generated multicast MBS session and perform a procedure of receiving the multicast service in operation 1.

When the UE 400 should release the associated PDU session while receiving the service, the UE 400 may transmit a PDU session release request message to the SMF 420 through the AMF 410 as shown in operation 2 and operation 3.

The SMF 420 may recognize that there are MBS sessions associated with the PDU session and determine that the UE 400 desires to continuously maintain the multicast service for the MBS sessions in operation 4.

When the PDU session is deleted according to the PDU session release request, the service for the associated MBS session cannot continue, and thus the SMF 420 may temporarily release the PDU session but process immediate generation of the PDU session again.

Although the PDU session is released, the SMF 420 may maintain mapping information between the PDU session ID and MBS session IDs and operate as if the PDU session were not temporarily released.

In operation 5 and operation 6, the SMF 420 may transmit a PDU session release command message to the UE 400 to inform that the PDU session release request is processed. According to an embodiment, the PDU session release command message may include a separate flag="re-establishment is required" in order to make a request for establishing a PDU session with the same PDU session ID to the UE 400 even though the UE 400 releases the PDU session to maintain the multicast service for the MBS sessions associated with the PDU session.

When the UE 400 receives the PDU session release command message, the UE 400 may identify that the UE joins in the MBS sessions associated with the PDU session to continuously receive the service in operation 7.

The UE 400 may recognize that the PDU session should be reestablished according to the received flag and transmit a PDU session establishment request message to the SMF 420 through the AMF 410 to generate the associated PDU session in operation 10 and operation 11. In operation 10 and operation 11, the UE 400 may inform that a PDU session which is the same as the existing PDU session is generated by configuring indication="existing PDU session" for the newly generated PDU session.

In operation 12, the SMF 420 may maintain MBS session context including association information for the PDU Session and serviced MBS sessions.

Operation 10 and operation 11 may be performed after the process of releasing the PDU session is completed by transmitting PDU session release complete transmitted by the UE 400 in response to the PDU session release command in operation 8 and operation 9. According to an embodiment, the procedure in which the UE 400 transmits PDU session release complete to the SMF 420 (operation 8 and operation 9) may be omitted.

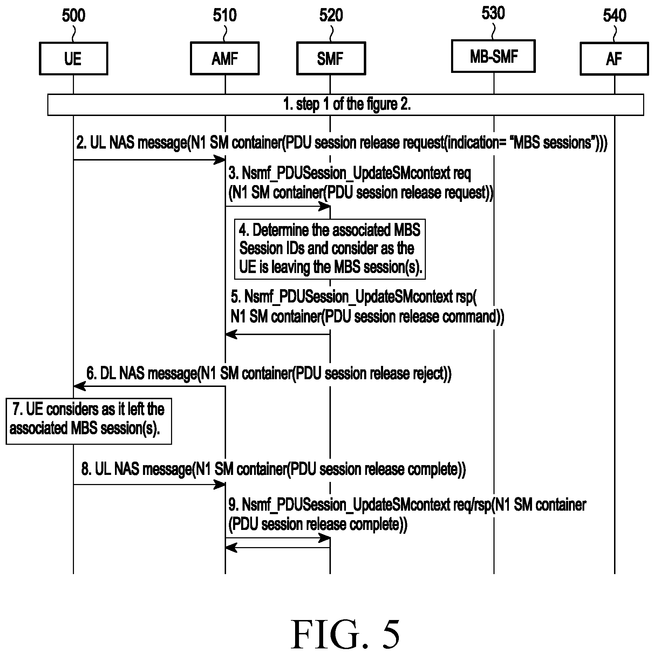

FIG. 5 illustrates an MBS session processing process when a UE makes a request for releasing an associated PDU session in a wireless communication system according to another embodiment of the disclosure.

FIG. 5 illustrates a process in which, when a UE 500 makes a request for releasing an associated PDU session, the UE 500 notifies of a request for leaving the MBS session and processes as if an SMF 520 received the request for leaving the MBS session.

Referring to FIG. 5, when the individual delivery method is used, a multicast traffic control process through the used associated PDU session may be performed. In operation 1 illustrated in FIG. 5, the multicast session may be generated as shown in operations 1-1 to 1-9 of FIG. 2 and the UE 500 may join in the generated multicast MBS session and perform a procedure of receiving the multicast service.

When the UE 500 should release the associated PDU session while receiving the service, the UE 500 may transmit a PDU session release request message to the SMF 520 through the AMF 510 as shown in operation 2 and operation 3.

The UE 500 may insert indication="MBS Session(s)" into the PDU session release request message of operation 2 and transmit the same in order to make a request for leaving the MBS session associated with the PDU session.

The SMF 520 identifies that there are MBS sessions associated with the PDU session in operation 4 and receives a request for leaving all of the MBS sessions associated with the PDU session, and accordingly, the SMF 520 may delete mapping information between the PDU session ID and MBS session IDs and process the UE 500 not to receive the service any more in the MBS session.

In operation 5 and operation 6, the SMF 520 may notify that the request for releasing the PDU session is processed by transmitting a PDU session release command message to the AMF 510 and the UE 500.

According to an embodiment, the PDU session release command message does not include a separate indication for the MBS session and may indirectly inform that the UE leaves MBS sessions associated with the PDU session. According to an embodiment, the PDU session release command message may include a list of MBS session IDs of the left MBS sessions to directly inform that the UE leaves the MBS sessions or may include indication= "left MBS sessions" in the PDU session release command message to directly inform that the UE leaves the associated MBS sessions.

When the UE 500 receives the PDU session release command message, the UE 500 may identify that the UE leaves the MBS sessions associated with the PDU session in operation 7.

When the UE 500 releases the PDU session according to the PDU session release command, the UE 500 may transfer a PDU session release complete message to the SMF 520 through the AMF 210 in operation 8 and operation 9. The SMF 520 may delete information on the PDU session from the network and complete the PDU session release procedure.

According to an embodiment, when the UE 500 transmits the PDU session release request message to the SMF 520 through the AMF 510 in operation 2 and operation 3, if the PDU session release request message does not include a separate indication, the SMF 520 may identify that there are MBS sessions associated with the PDU session and determine that the UE 500 desires to continuously still maintain the multicast service for the MBS session. That is, the SMF 520 may perform the same operation as operation 4 of FIG. 3.

According to an embodiment, the UE 500, the AMF 510, and the SMF 520 may reject the release for the PDU session by performing the same procedure as operation 5 to operation 7 of FIG. 3.

According to another embodiment, after releasing the PDU session by performing the same procedure as operation 5 to operation 12 of FIG. 4, the UE 500, the AMF 510, and the SMF 520 may allow the UE 500 immediately establish the PDU session again and continuously receive the multicast service for associated MBS sessions.

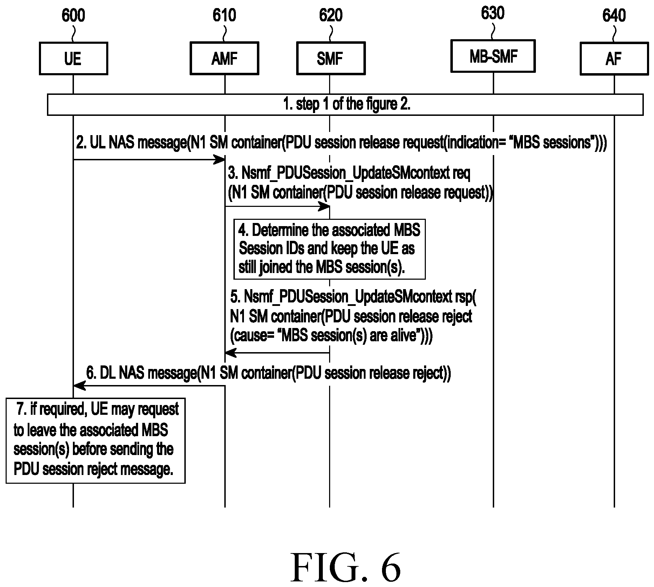

FIG. 6 illustrates a process in which a UE continuously receives the MBS service when a request for releasing an associated PDU session is made in a wireless communication system according to another embodiment of the disclosure.

FIG. 6 illustrates a process in which a UE 600 informs of a request for maintaining joining in the MBS session and accordingly an SMF 620 allows the UE 600 to continuously receive the multicast service.

Referring to FIG. 6, when the individual delivery method is used, a multicast traffic control process through the used associated PDU session may be performed. In operation 1 of FIG. 6, the multicast session may be generated as shown in operations 1-1 to 1-9 of FIG. 2 and the UE 600 may join in the generated multicast MBS session and perform a procedure of receiving the multicast service.

When the UE 600 should release the associated PDU session while receiving the service, the UE 600 may transmit a PDU session release request message to the SMF 620 through the AMF 610 as shown in operation 2 and operation 3. The UE 600 may insert indication="MBS Session(s)" into the PDU session release request message and transmit the same in order to make a request for continuously still maintaining the multicast service for the MBS session associated with the PDU session.

The SMF 620 may identify that there are MBS sessions associated with the PDU session and identify that a request for continuously still maintaining the multicast service for all of the MBS sessions associated with the PDU session is received in operation 4.

When the PDU session is deleted according to the PDU session release request, the service for the associated MBS sessions cannot continue, and thus the SMF 620 may reject the request from the UE 600.

According to an embodiment, in operation 5 and operation 6, the SMF 620 may transmit a PDU session release reject message to the UE 600 through the AMF 610 and inform that the PDU session release request is rejected. According to an embodiment, the PDU session release reject message may include cause ="MBS Session(s) are alive" as a cause of rejection.

When the UE 600 receives the PDU session release reject message, the UE 600 may release the PDU session by transmitting the PDU session release request message after first performing leaving for the MBS sessions associated with the PDU session through a PDU session modification request process in operation 7.

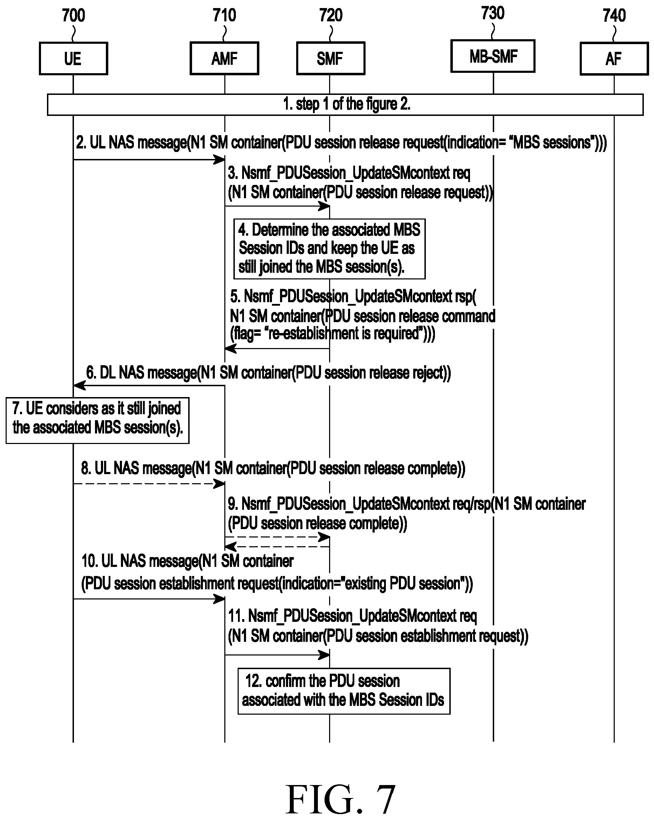

FIG. 7 illustrates a process in which a UE continuously receives the MBS service when a request for releasing an associated PDU session is made in a wireless communication system according to another embodiment of the disclosure.

FIG. 7 illustrates a process in which, when a UE 700 makes a request for releasing an associated PDU session, the UE 700 informs of a request for maintaining joining of the MBS session and an SMF 720 allows the UE 700 to continuously receive the multicast service.

Referring to FIG. 7, when the individual delivery method is used, a multicast traffic control process through the used associated PDU session may be performed. In operation 1 of FIG. 7, the multicast session may be generated as shown in operations 1-1 to 1-9 of FIG. 2 and the UE 700 may join in the generated multicast MBS session and perform a procedure of receiving the multicast service.

When the UE 700 should release the associated PDU session while receiving the service, the UE 700 may transmit a PDU session release request message to the SMF 720 through the AMF 710 as shown in operation 2 and operation 3.

The UE 700 may insert indication="MBS Session(s)" into the PDU session release request message and transmit the same in order to make a request for continuously still maintaining the multicast service for the MBS session associated with the PDU session.

The SMF 720 may identify that there are MBS sessions associated with the PDU session and identify that a request for continuously still maintaining the multicast service for all of the MBS sessions associated with the PDU session is received in operation 4.

When the PDU session is deleted according to the PDU session release request, the service for the associated MBS session cannot continue, and thus the SMF 720 may temporarily release the PDU session but process immediate generation of the PDU session again.

Although the PDU session is released, the SMF 720 may maintain mapping information between the PDU session ID and MBS session IDs and operate as if the PDU session were not temporarily released.

In operation 5 and operation 6, the SMF 720 may transmit a PDU session release command message to the UE 700 to inform that the PDU session release request is processed. The PDU session release command message may include a separate flag="re-establishment is required" in order to make a request for establishing a PDU session with the same PDU session ID to the UE 700 even though the UE 700 releases the PDU session to maintain the multicast service for the MBS sessions associated with the PDU session.

When the UE 700 receives the PDU session release command message, the UE 700 may identify that the UE joins in the MBS sessions associated with the PDU session to continuously receive the service in operation 7.

The UE 700 may identify that the PDU session should be reestablished according to the received flag. In operation 10 and operation 11, the UE 700 may transmit a PDU session establishment request message to the SMF 720 through the AMF 710 to generate the associated PDU session.

The UE 700 may inform that a PDU session which is the same as the existing PDU session is generated for a newly generated PDU session like indication="existing PDU session".

In operation 12, the SMF 720 may maintain MBS session context including association information for the PDU session and serviced MBS sessions.

Operation 10 and operation 11 may be performed after the process of releasing the PDU session is completed by transmitting the PDU session release complete message transmitted by the UE 700 in response to the PDU session release command as shown in operation 8 and operation 9. According to an embodiment, the procedure in which the UE 700 transmits the PDU session release complete message to the SMF 720 (operation 8 and operation 9) may be omitted.

According to an embodiment, when the UE 700 transmits the PDU session release request message to the SMF 720 through the AMF 710 in operation 2 and operation 3, if the PDU session release request message does not include a separate indication, the SMF 720 may identify that there are MBS sessions associated with the PDU session and recognize that the UE transmits a request for leaving the MBS session. That is, the SMF 720 may perform the same operation as operation 4 of FIG. 2.

According to an embodiment, the UE 700, the AMF 710, and the SMF 720 may perform release for the PDU session by performing a procedure which is the same as operation 5 to operation 9 of FIG. 2 and process as if the UE 700 left the multicast service for the MBS session associated with the PDU session.

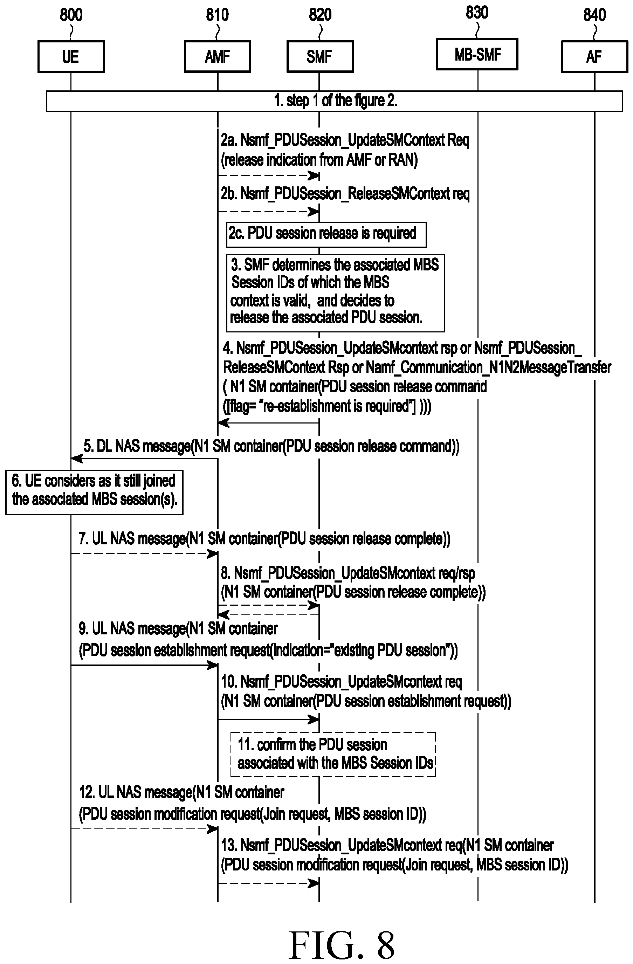

FIG. 8 illustrates a process in which a UE continuously receives the MBS service when a network makes a request for releasing an associated PDU session in a wireless communication system according to an embodiment of the disclosure.

In FIG. 8, when the network makes a request for releasing the associated PDU session, an SMF 820 may maintain joining in the MBS session to allow a UE 800 to continuously receive the multicast service.

Referring to FIG. 8, when the individual delivery method is used, a multicast traffic control process through the used associated PDU session may be performed. In operation 1 of FIG. 8, the multicast session may be generated as shown in operations 1-1 to 1-9 of FIG. 2 and the UE 800 may join in the generated multicast MBS session and perform a procedure of receiving the multicast service.

Meanwhile, a situation in which the UE 800 should release the associated PDU Session in the network while receiving the service may occur (see operation 2a/2b/2c).

The SMF 820 may determine (or recognize) that the associated PDU session needs to be released in at least one of cases (1) to (8) below.
(1) the case in which the PCF performs an SM policy association termination process for the associated PDU session to the SMF 820,
(2) the case in which the AMF 810 recognizes that there is mis-match of PDU session statuses between the UE 800 and the AMF 810,
(3) the case in which the NG-RAN releases network resources for all QoS flow of the PDU session,
(4) the case in which a request for cancelling authorization for the UE 800 is received from a data network (DN),
(5) the case in which a request for releasing the PDU session is received from a UDM due to a change in subscription information,
(6) the case in which a request for releasing the PDU session is received from a CHF,
(7) the case in which a event notification indicating that the UE 800 moves to the outside of an LADN service area is received from the AMF 810,
(8) the case in which release of the PDU session is needed due to UPF re-allocation according to a local policy

The SMF 820 may recognize that there are MBS sessions associated with the PDU session in operation 3 and the MBS sessions associated with the PDU session are still valid, and thus determine that the UE 800 continuously maintains the multicast service.

At this time, when the SMF 820 deletes the associated PDU session through the existing technology, the service for associated MBS sessions cannot continue, and accordingly, the SMF 820 may temporarily release the PDU session but process immediate generation of the PDU session again.

Although the PDU session is released, the SMF 820 may maintain mapping information between the PDU session ID and MBS session IDs and operate as if the PDU session were not temporarily released.

In operation 4 and operation 5, the SMF 820 may transmit a PDU session release command message to the UE 800 and inform that the PDU session release request is processed. At this time, the PDU session release command message may include a separate flag="re-establishment is required" in order to make a request for establishing a PDU session with the same PDU session ID to the UE even though the UE releases the PDU session to maintain the multicast service for the MBS sessions associated with the PDU session.

When the SMF 820 transmits the PDU Session release command message to the AMF 810 in operation 4, the PDU session release command message may be included in an N1 SM container of an Nsmf_PDUSession_UpdateSMContext Response in response to an Nsmf_PDUSession_UpdateSMContext Request. According to an embodiment, the PDU session release command message may be included in the N1 SM container of the Nsmf_PDUSession_ReleaseSMContext Response in response to the Nsmf_PDUSession_ReleaseSMContext Request. According to an embodiment, the PDU session release command message may be included in the N1 SM container of an Namf_Communication_N1N2MessageTransfer message.

When the UE 800 receives the PDU session release command message, the UE 800 may identify that the UE joins in the MBS sessions associated with the PDU session to continuously receive the service and identify that the PDU session should be reestablished according to the received flag in operation 6.

In operation 9 and operation 10, the UE 800 may transmit a PDU session establishment request message to the SMF 820 through the AMF 810 to generate the associated PDU session. For the newly generated PDU session, the UE 800 may inform of the generation of a PDU session which is the same as the existing PDU session like indication= "existing PDU session", and the SMF 820 may maintain MBS session context including association information for the PDU session and the serviced MBS session in operation 11.

Operation 9 and operation 10 may be performed after the UE 800 transmits the PDU session release complete message in response to the PDU Session release command and the process of releasing the PDU session is completed as shown in operation 7 and operation 8. According to an embodiment, the procedure in which the UE 800 transmits the PDU session release complete message to the SMF 820 (operation 7 and operation 8) may be omitted.

According to an embodiment, the UE 800 may perform a request for joining in the MBS session once more through a separate PDU session modification request process.

According to an embodiment, in operation 3, the SMF 820 may identify there are MBS sessions associated with the PDU session. After the UE 800 deletes the associated PDU session after determining to continuously maintain the multicast service since the MBS sessions associated with the PDU session are still valid, the service for the associated MBS session cannot continue, and thus the SMF 820 may not perform or cancel release of the PDU session temporarily.

When the UE 800 may join in the MBS session associated with the PDU session and does not receive the service in addition to a trigger condition of the existing NW initiated PDU session release operation, the SMF 820 may perform NW initiated PDU session release. When the UE 800 joins in the MBS session associated with the PDU Session and receives the service, the SMF 820 may perform NW initiated PDU session release or may cancel or postpone PDU session release according to the embodiment.

The trigger of the existing NW initiated PDU Session release operation means the case in which one or more of the following conditions are satisfied.
(1) the case in which the PCF performs an SM policy association termination process for the associated PDU session to the SMF,
(2) the case in which the AMF 810 recognizes that there is mis-match of PDU session statuses between the UE 800 and the AMF 810,
(3) the case in which the NG-RAN releases network resources for all QoS flow of the PDU session,
(4) the case in which a request for cancelling authorization for the UE 800 is received from a data network (DN),
(5) the case in which a request for releasing the PDU session is received from a UDM due to a change in subscription information,
(6) the case in which a request for releasing the PDU session is received from a CHF,
(7) the case in which a event notification indicating that the UE 800 moves to the outside of an LADN service area is received from the AMF 810,
(8) the case in which release of the PDU session is needed due to UPF re-allocation according to a local policy

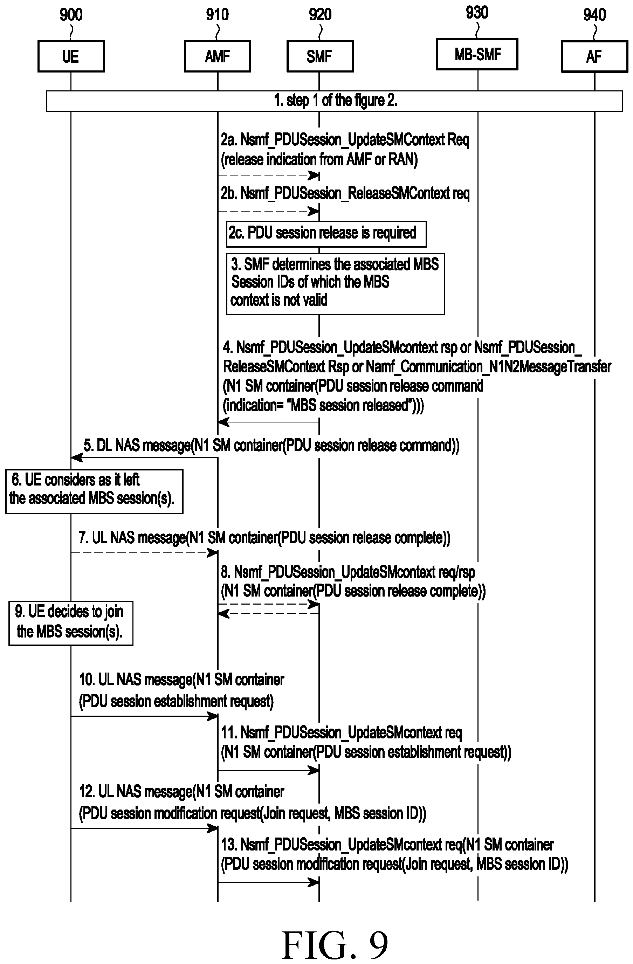

FIG. 9 illustrates a process of processing an MBS session when a network makes a request for releasing an associated PDU session in a wireless communication system according to an embodiment of the disclosure.

FIG. 9 illustrates a process in which, when a network makes a request for releasing the associated PDU session, an SMF 920 processes that the MBS session is released and inform a UE 900 of leaving from the MBS session.

Referring to FIG. 9, when the individual delivery method is used, a multicast traffic control process through the used associated PDU session may be performed. In operation 1 of FIG. 9, the multicast session may be generated as shown in operations 1-1 to 1-9 of FIG. 2 and the UE 900 may join in the generated multicast MBS session and perform a procedure of receiving the multicast service.

A situation in which the UE 900 should release the associated PDU Session in the network while receiving the service may occur (see operation 2a/2b/2c).

The SMF 920 may determine that the associated PDU session needs to be released in at least one of cases (1) to (8) below.
(1) the case in which the PCF performs an SM policy association termination process for the associated PDU session to the SMF,
(2) the case in which the AMF 910 recognizes that there is mis-match of PDU session statuses between the UE 900 and the AMF 910,
(3) the case in which the NG-RAN releases network resources for all QoS flow of the PDU session,
(4) the case in which a request for cancelling authorization for the UE is received from a DN,
(5) the case in which a request for releasing the PDU session is received from a UDM due to a change in subscription information,
(6) the case in which a request for releasing the PDU session is received from a CHF,
(7) the case in which a event notification indicating that the UE 900 moves to the outside of an LADN service area is received from the AMF 910,
(8) the case in which release of the PDU session is needed due to UPF re-allocation according to a local policy

According to an embodiment, in at least one of cases (1) to (8) above, the SMF 920 may recognize that there is an MBS session associated with the PDU session in operation 3 and determine to process as if the multicast service for the UE 900 does not need to be continuously maintained since the MBS session associated with the PDU session is not valid. The SMF 920 may transmit a PDU session release command message to the UE 900 in order to delete the associated PDU session and inform that the request for releasing the PDU Session is processed in operation 4 and operation 5.

In order to inform that the MBS session is released or the UE 900 leaves the corresponding MBS session since the MBS session associated with PDU session is not valid, the PDU session release command message may include separate Indication="MBS Session(s) released" or "left MBS Session(s)".

When the SMF 920 transmits the PDU Session release command message to the AMF 910 in operation 4, the PDU session release command message may be included in an N1 SM container of an Nsmf_PDUSession_UpdateSMContext Response in response to an Nsmf_PDUSession_UpdateSMContext Request. The PDU session release command message may be included in the N1 SM container of the Nsmf_PDUSession_ReleaseSMContext Response in response to the Nsmf_PDUSession_ReleaseSMContext Request. The PDU session release command message may be included in the N1 SM container of an Namf_Communication_N1N2MessageTransfer message.

When the UE 900 receives the PDU Session release command message, it may be recognized that the UE 900 leaves MBS sessions associated with the PDU session or the MBS sessions are released and thus the service is not provided through the indication, and it may be processed that the UE 900 leaves the associated MBS sessions as shown in operation 6.

In operation 7 and operation 8, the process of releasing the PDU session may be completed by transmitting a PDU session release complete message transmitted by the UE 900 in response to the PDU session release command or a procedure in which the UE 900 transmits the PDU Session release complete message to the SMF 920, that is, operation 7 and operation 8 may be omitted.

Meanwhile, when determining to receive the multicast service in operation 9, the UE 900 may transmit a PDU session establishment request message to the SMF 920 and generate an associate PDU session in operation 10 and operation 1. In operation 12 and operation 13, the UE 900, the AMF 910, and the SMF 920 may make a request for joining in the MBS session through a PDU session modification request process.

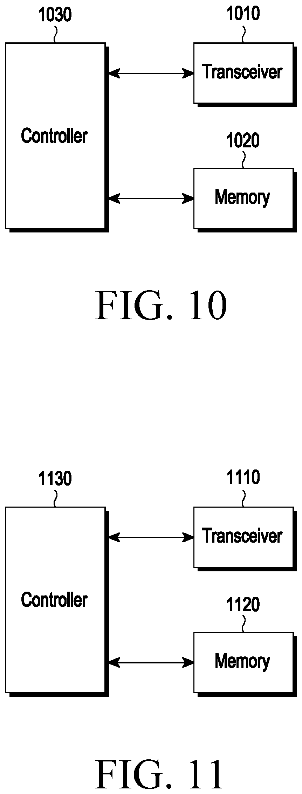

FIG. 10 illustrates the structure of an SMF according to an embodiment of the disclosure.

The SMF described with reference to FIGs. 1 to 10 may correspond to the SMF of FIG. 10.

Referring to FIG. 10, the SMF may include a transceiver 1010, memory 1020, and a controller 1030. According to a communication method of the SMF, the transceiver 1010, the controller 1030, and the memory 1020 of the SMF may operate. However, the elements of the SMF are not limited to the above-described example. For example, the SMF may include more elements or fewer elements than the above-described elements. Further, the transceiver 1010, the controller 1030, and the memory 1020 may be implemented in the form of a single chip. The controller 1030 may include one or more processors.

The transceiver 1010 collectively refers to a receiver of the SMF and a transmitter of the UE, and may transmit and receive a signal to and from a network entity. To this end, the transceiver 1010 may include an RF transmitter configured to up-convert and amplify a frequency of a transmitted signal and an RF receiver configured to low-noise amplify a received signal and down-convert a frequency. However, this is only an embodiment of the transceiver 1010, and elements of the transceiver 1010 are not limited to the RF transmitter and the RF receiver.

Further, the transceiver 1010 may receive a signal through a radio channel, output the signal to the controller 1030, and transmit the signal output from the controller 1030 through the radio channel.

The memory 1020 may store programs and data required for the operation of the SMF. Further, the memory 1020 may store control information or data included in a signal acquired by the SMF. The memory 1020 may be configured by storage media such as ROM, RAM, a hard disc, a CD-ROM, and a DVD, or a combination of the storage media. The memory 1020 may not separately exist and may be included in the processor 1030.

The controller 1030 may control a series of operations so that the SMF may operate according to the embodiments of the disclosure. For example, the controller 1030 may receive a control signal and a data signal through the transceiver 1010 and process the received control signal and data signal. Further, the controller 1030 may transmit the processed control signal and data signal through the transceiver 1010. The number of controllers 1030 may be plural, and the controller 1030 may perform an operation of controlling elements of the SMF by executing a program stored in the memory 420.

The controller 1030 may perform control to receive a first message making a request for releasing a packet data unit (PDU) session from an access and mobility management function (AMF), identity an MBS session mapped to the PDU session, determine whether the UE related to the PDU session continuously receives a service in the MBS session, and perform control to transmit information on whether the UE continuously receives the service in the MBS session to the AMF, based on the determination result.

When it is determined that the UE does not receive the service any more in the MBS session, the controller 1030 may perform control to transmit an indication indicating that the UE did not receive the service any more in the MBS session to the AMF and perform control to receive a second message indicating that release of the PDU session is completed from the AMF.

When it is determined that the UE continuously receives the service in the MBS session, the controller 1030 may perform control to transmit information indicating that the MBS session is in an alive state to the AMF.

When it is determined that the UE continuously receives the service in the MBS session, the controller 1030 may perform control to transmit a flag making a request for establishing a PDU session with the same PDU session ID to the AMF.

The controller 1030 may determine a first MBS session to continuously provide the service to the UE and a second MBS session not to provide the service to the UE any more among a plurality of MBS sessions mapped to the PDU session.

FIG. 11 illustrates the structure of a UE according to an embodiment of the disclosure.

The UE described with reference to FIGs. 1 to 9 may correspond to the UE of FIG. 11.

Referring to FIG. 11, the UE may include a transceiver 1110, memory 1120, and a controller 1130. According to a communication method of the UE, the transceiver 1110, the controller 1130, and the memory 1120 of the UE may operate. However, the elements of the UE are not limited to the above example. For example, the UE may include more or fewer elements than the above elements. Further, the transceiver 1110, the controller 1130, and the memory 1120 may be implemented in the form of a single chip. The controller 1130 may include one or more processors.

The transceiver 1110 collectively refers to a receiver of the UE and a transmitter of the UE, and may transmit and receive a signal to and from a network entity. To this end, the transceiver 1110 may include an RF transmitter configured to up-convert and amplify a frequency of a transmitted signal and an RF receiver configured to low-noise amplify a received signal and down-convert a frequency. However, this is only an embodiment of the transceiver 1110, and elements of the transceiver 1110 are not limited to the RF transmitter and the RF receiver.

Further, the transceiver 1110 may receive a signal through a radio channel, output the signal to the controller 1130, and transmit the signal output from the controller 1130 through the radio channel.

The memory 1120 may store programs and data required for the operation of the UE. The memory 1120 may store control information or data included in a signal acquired by the UE. The memory 1120 may be configured by storage media such as ROM, RAM, hard disc, CD-ROM, and DVD, or a combination of the storage media. The memory 1120 may not separately exist and may be included in the processor 1130.

The controller 1130 may control a series of processes so that the UE may operate according to the embodiments of the disclosure. For example, the controller 1130 may receive a control signal and a data signal through the transceiver 1110 and process the received control signal and data signal. Further, the controller 1130 may transmit the processed control signal and data signal through the transceiver 1110. The number of controllers 1130 may be plural, and the controller 1130 may perform an operation of controlling the elements of the UE by executing a program stored in the memory 1120.

The controller 1130 may perform control to transmit a first message making a request for releasing a packet data unit (PDU) to an access and mobility management function (AMF), perform control to receive first information on whether the UE continuously receives the service in an MBS session mapped to the PDU session from the AMF, and process the MBS session, based on the first information.

When it is determined that the UE does not receive the service any more in the MBS session, the controller 1130 may perform control to receive an indication indicating that the UE does not receive the service any more in the MBS session from the AMF and perform control to transmit a second message indicating that release of the PDU session is completed to the AMF.

When it is determined that the UE continuously receives the service in the MBS session, the controller 1130 may perform control to receive information indicating that the MBS session is in an alive state from the AMF.

When it is determined that the UE continuously receives the service in the MBS session, the controller 1130 may perform control to receive a flag making a request for establishing a PDU session with the same PDU session ID from the AMF.

When implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements. It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims and equivalents thereof.

## Claims

1. A method of processing a multicast-broadcast service (MBS) session by a session management function (SMF) in a wireless communication system, the method comprising:
in case that it is determined that a user equipment (UE) leaves the MBS session, receiving, from an access and mobility management function (AMF), a first message to request for updating a packet data unit (PDU) session related to the MBS session; and
transmitting, to the AMF, a second message corresponding to a response to an update of the PDU session in response to the first message,
wherein the second message comprises information indicating that the UE is removed from the MBS session.

2. The method of claim 1, wherein an ID for the MBS session mapped to the PDU session is deleted.

3. The method of claim 1, further comprising:
in case that it is determined that the UE continuously receives the service in the MBS session, transmitting, to the UE through the AMF, information indicating that the MBS session is in an alive state.

4. The method of claim 1, further comprising:
in case that it is determined that the UE continuously receives the service in the MBS session, transmitting, to the UE through the AMF, a flag making a request for establishing a PDU session with an equal PDU session ID.

5. The method of claim 1, further comprising:
determining a first MBS session to continuously provide the service to the UE and a second MBS session not to provide the service to the UE any more among a plurality of MBS sessions mapped to the PDU session.

6. A method of processing a multicast-broadcast service (MBS) session by a user equipment (UE) in a wireless communication system, the method comprising:
in case that it is determined that the UE leaves the MBS session, transmitting, to a session management function (SMF) through an access and mobility management function (AMF), a first message to request for changing a packet data unit (PDU) session related to the MBS session;
receiving, from the SMF through the AMF, a second message corresponding to a response to a change in the PDU session in response to the first message; and
processing the MBS sessions based on the first information,
wherein the second message comprises information indicating that the UE is removed from the MBS session.

7. The method of claim 6, wherein an ID of the MBS session mapped to the PDU session is deleted.

8. The method of claim 6, further comprising:
in case that it is determined that the UE continuously receives the service in the MBS session, receiving, from the SMF through the AMF, information indicating that the MBS session is in an alive state.

9. The method of claim 6, further comprising:
in case that it is determined that the UE continuously receives the service in the MBS session, receiving, from the SMF through the AMF, a flag making a request for establishing a PDU session with an equal PDU session ID.

10. The method of claim 6, wherein a first MBS session to continuously provide the service to the UE is determined among a plurality of MBS sessions mapped to the PDU session and a second MBS session not to provide the service to the UE any more is determined among the plurality of MBS sessions.

11. A session management function (SMF) processing a multicast-broadcast service (MBS) session in a wireless communication system, the SMF comprising:
a transceiver; and
a controller connected to the transceiver, wherein the controller is configured to:
in case that it is determined that a user equipment (UE) leaves the MBS session, perform control to receive, from an access and mobility management function (AMF), a first message to request for updating a packet data unit (PDU) session related to the MBS session; and
perform control to transmit, to the AMF, a second message corresponding to a response to an update of the PDU session in response to the first message, and
wherein the second message comprises information indicating that the UE is removed from the MBS session.

12. The SMF of claim 11, wherein an ID for the MBS session mapped to the PDU session is deleted.

13. The SMF of claim 11, wherein the controller is configured to, in case that it is determined that the UE continuously receives the service in the MBS session, perform control to transmit, to the UE through the AMF, information indicating that the MBS session is in an alive state.

14. A user equipment (UE) processing a multicast-broadcast service (MBS) session in a wireless communication system, the UE comprising:
a transceiver; and
a controller connected to the transceiver, wherein the controller is configured to:
in case that it is determined that the UE leaves the MBS session, perform control to transmit, to a session management function (SMF) through an access and mobility management function (AMF), a first message to request for changing a packet data unit (PDU) session related to the MBS session;
perform control to receive, from the SMF through the AMF, a second message corresponding to a response to a change in the PDU Session in response to the first message; and
process the MBS session based on the first information, and
wherein the second message comprises information indicating that the UE is removed from the MBS session.

15. The UE of claim 14, wherein an ID for the MBS session mapped to the PDU session is deleted.
